# EUROPÄISCHE PATENTSCHRIFT

(11) **EP 1 963 937 B1**
(45) Veröffentlichungstag und Bekanntmachung des Hinweises auf die Patenterteilung: **30.09.2009**
(21) Anmeldenummer: 05819501.7
(22) Anmeldetag: 19.12.2005
(51) Int. Cl.: G05B 19/418

(54) **ELEKTRISCHES FELDGERÄT UND VERFAHREN ZUM HERSTELLEN EINER DATENVERBINDUNG ZWISCHEN EINER DATENSCHNITTSTELLE DES ELEKTRISCHEN FELDGERÄTES UND EINEM GERÄTEINTERNEN DATENSPEICHER**
ELECTRICAL FIELD DEVICE AND METHOD FOR ESTABLISHING A DATA LINK BETWEEN A DATA INTERFACE OF THE ELECTRICAL FIELD DEVICE AND A DATA MEMORY INSIDE THE DEVICE
APPAREIL DE TERRAIN ELECTRIQUE ET PROCEDE POUR L'ETABLISSEMENT D'UNE CONNEXION DE DONNEES ENTRE UNE INTERFACE DE DONNEES DE L'APPAREIL DE TERRAIN ELECTRIQUE ET UNE MEMOIRE DE DONNEES INTERNE A L'APPAREIL

(43) Veröffentlichungstag der Anmeldung: 03.09.2008
(73) Patentinhaber: SIEMENS AKTIENGESELLSCHAFT, 80333 München (DE)
(72) Erfinder: SCHWABE, Stefan, 10589 Berlin (DE); WALZ, Stefan, 13127 Berlin (DE)
(86) Internationale Anmeldenummer: PCT/DE2005/002308
(87) Internationale Veröffentlichungsnummer: WO 2007/071211

(56) Entgegenhaltungen:
- DE-U1-202004 020 653
- US-A- 5 664 162

## Beschreibung

Die Erfindung betrifft ein elektrisches Feldgerät mit einer mikroprozessorgesteuerten Steuereinrichtung, einem mit der Steuereinrichtung über einen ersten Speichercontroller in Verbindung stehenden geräteinternen Datenspeicher und einer mit der Steuereinrichtung in Verbindung stehenden Datenschnittstelle zum Anschließen externer Geräte an das elektrische Feldgerät. Die Erfindung betrifft auch ein Verfahren zum Herstellen einer Datenverbindung zwischen der Datenschnittstelle des elektrischen Feldgerätes und dem geräteinternen Datenspeicher.

Ein solches elektrisches Feldgerät ist beispielsweise aus dem deutschen Gebrauchsmuster mit der Erteilungsnummer 20 2004 020 653 bekannt. Das bekannte elektrische Feldgerät umfasst eine mikroprozessorgesteuerte Steuereinrichtung, einen geräteinternen Datenspeicher und eine mit der Steuereinrichtung verbundene Datenschnittstelle. Bei dem bekannten Feldgerät sind an die Datenschnittstelle insbesondere externe passive Datenspeichermodule, wie beispielsweise ein USB-Stick, anschließbar.

Elektrische Feldgeräte werden üblicherweise zur Messwertaufnahme bei automatisierten Prozessen und zur Steuerung solcher Prozesse eingesetzt. Beispielsweise kann es sich bei den Prozessen um chemische oder verfahrenstechnische Prozesse, industrielle Fertigungsprozesse oder um Verteilungsprozesse beispielsweise zur Verteilung elektrischer Energie in Energieversorgungsnetzen handeln. Dabei sind die elektrischen Feldgeräte üblicherweise in der Nähe des jeweiligen automatisierten Prozesses angeordnet. Im Falle von elektrischen Energieversorgungsnetzen kann es sich bei den elektrischen Feldgeräten beispielsweise um Leitgeräte oder Schutzgeräte handeln. Mit letzteren werden Messwerte aus dem Energieversorgungsnetz aufgenommen und auf die Einhaltung erlaubter Betriebsbereiche überprüft. Liegen die Messwerte außerhalb des erlaubten Betriebsbereiches, so werden automatisch Gegenmaßnahmen von dem elektrischen Schutzgerät, wie beispielsweise das Öffnen eines Leistungsschalters, veranlasst.

Zur Steuerung der Abläufe in einem elektrischen Feldgerät werden üblicherweise mikroprozessorgesteuerte Steuereinrichtungen eingesetzt, wie beispielsweise eine Baugruppe mit einer Zentralrecheneinheit oder "Central Processing Unit" (CPU). Diese greift auf einen geräteinternen Speicher des Feldgerätes zu, in dem sie Daten abspeichern kann und aus dem sie beispielsweise ein abzuarbeitendes Programm auslesen kann. Bei einem solchen abzuarbeitenden Programm kann es sich beispielsweise um eine so genannte Firmware des Feldgerätes handeln.

Zur Durchführung aller Datenverarbeitungsprozesse sind die mikroprozessorgesteuerte Steuereinrichtung und der Datenspeicher mit elektrischer Energie, einer so genannten Hilfsenergie des Feldgerätes, zu versorgen. Diese kann beispielsweise durch eine Stromquelle in dem elektrischen Feldgerät, wie eine Batterie oder - weitaus häufiger - durch ein in dem elektrischen Feldgerät vorhandenes Netzteil, das an eine äußere Energieversorgung angeschlossen ist, bereitgestellt werden. Beim Ausfall der Energieversorgung und/oder der Steuereinrichtung lassen sich die Daten, die in dem geräteinternen Datenspeicher gespeichert worden sind, von außen nur noch mit Mühe auslesen.

Die Aufgabe der Erfindung besteht darin, ein elektrisches Feldgerät sowie ein Verfahren zum Herstellen einer Datenverbindung zwischen einer Datenschnittstelle des Feldgerätes und einem geräteinternen Datenspeicher anzugeben, wobei auch dann, wenn das Feldgerät nicht vollständig betriebsbereit ist, ein Datenaustausch mit dem geräteinternen Datenspeicher ermöglicht ist.

Bezüglich des Feldgerätes wird diese Aufgabe erfindungsgemäß dadurch gelöst, dass die Datenschnittstelle über einen zweiten Speichercontroller mit dem geräteinternen Datenspeicher verbindbar ist. Hierdurch besteht nämlich nicht nur die Möglichkeit, über die Steuereinrichtung selbst auf den geräteinternen Datenspeicher zuzugreifen, sondern auch die Möglichkeit eines Datenaustauschs über die Datenschnittstelle des elektrischen Feldgerätes, vollkommen ohne die Steuereinrichtung des elektrischen Feldgerätes zu benötigen. Beispielsweise kann an die Datenschnittstelle ein externer Computer angeschlossen werden, mit dem auf die Daten in dem geräteinternen Datenspeicher zugegriffen wird.

Eine vorteilhafte Ausführungsform des erfindungsgemäßen Feldgerätes besteht darin, dass der geräteinterne Datenspeicher und die Datenschnittstelle mittels einer Stromversorgungsleitung verbunden sind. Auf diese Weise kann bei Ausfall der Stromversorgung im Feldgerät der geräteinterne Datenspeicher über die Datenschnittstelle mit der zum Speichern oder Auslesen von Daten benötigten elektrischen Energie versorgt werden.

Gemäß einer weiteren vorteilhaften Ausführungsform des erfindungsgemäßen Feldgerätes ist ferner eine eingangsseitig mit der Datenschnittstelle und ausgangsseitig mit der Steuereinrichtung und dem zweiten Speichercontroller verbundene Umschaltvorrichtung und eine Überwachungseinrichtung vorgesehen, wobei die Überwachungseinrichtung zum Überwachen einer geräteinternen Stromversorgung und/oder der Steuereinrichtung des elektrischen Feldgerätes auf Funktionstüchtigkeit ausgebildet ist und bei einem Ausfall der geräteinternen Stromversorgung und/oder der Steuereinrichtung die Umschaltvorrichtung zum Trennen der Verbindung zwischen der Datenschnittstelle und der Steuereinrichtung und zum Herstellen der Verbindung zwischen der Datenschnittstelle und dem zweiten Speichercontroller veranlasst. Hierdurch kann besonders vorteilhaft eine automatische Umschaltung des Zugriffsweges auf den geräteinternen Datenspeicher stattfinden. Bei einem Defekt im elektrischen Feldgerät, der sich auf die Steuereinrichtung oder die Stromversorgung im Feldgerät bezieht, so dass ein Zugriff auf den geräteinternen Datenspeicher über die Steuereinrichtung des elektrischen Feldgerätes nicht mehr möglich ist, wird der Zugriffsweg durch die Überwachungseinrichtung und die Umschalteinrichtung derart umgeschaltet, dass nunmehr ein Datenaustausch zwischen dem geräteinternen Datenspeicher und der Datenschnittstelle stattfinden kann, ohne dass die Steuereinrichtung des elektrischen Feldgerätes daran beteiligt wäre.

Eine weitere vorteilhafte Ausführungsform des elektrischen Feldgerätes sieht außerdem vor, dass das elektrische Feldgerät eine abnehmbare Bedieneinheit aufweist, die zumindest den geräteinternen Datenspeicher, die Datenschnittstelle und den zweiten Speichercontroller umfasst. In diesem Fall handelt es sich bei dem elektrischen Feldgerät um ein modular aufgebautes elektrisches Feldgerät, bei dem die elektrische Steuereinrichtung in einem ersten Gehäusemodul des elektrischen Feldgerätes angeordnet ist und die Bedienelemente des elektrischen Feldgerätes, wie ein Display, eine Tastatur und die Datenschnittstelle, gemeinsam mit dem geräteinternen Datenspeicher und dem zweiten Speichercontroller in einem abnehmbar mit dem ersten Gehäusemodul verbindbaren Bedienmodul angeordnet sind. Durch diese spezielle Anordnung der Komponenten in dem Feldgerät wird ein Zugriff auf den Datenspeicher des Feldgerätes auch dann ermöglicht, wenn keine Datenverbindung zwischen dem Gehäusemodul mit der Steuereinrichtung und der Bedieneinheit besteht.

Ein Ausführungsbeispiel eines solchen modular aufgebauten Feldgerätes ist in der DE 19817945 C1 beschrieben. Solch ein Feldgerät eignet sich besonders zum Einbau in einen Schaltschrank, da in diesem Fall nicht das komplette Gerät in die Schaltschranktür eingebaut werden muss, sondern lediglich das Bedienmodul an der Schaltschranktür befestigt wird und mittels einer Datenleitung ein Datenaustausch zwischen dem Bedienmodul und dem im Schaltschrank angeordneten ersten Gehäusemodul mit der Steuereinrichtung stattfindet.

Die Lösung der oben aufgeführten Aufgabe bezüglich des genannten Verfahrens besteht darin, dass eine Überwachungseinrichtung die Funktionstüchtigkeit einer Steuereinrichtung und/oder einer internen Stromversorgung des elektrischen Feldgerätes überwacht; bei Ausfall der Steuereinrichtung und/oder der internen Stromversorgung veranlasst die Überwachungseinrichtung eine Trennung der Datenverbindung zwischen der Steuereinrichtung und dem geräteinternen Datenspeicher und eine Herstellung einer Datenverbindung zwischen der Datenschnittstelle und dem geräteinternen Datenspeicher über einen Speichercontroller. Auf diese Weise kann besonders vorteilhaft ein Datenaustausch von außen über die Datenschnittstelle mit dem geräteinternen Datenspeicher stattfinden, ohne dass die Steuereinrichtung des elektrischen Feldgerätes benötigt wird.

Als vorteilhaft wird es außerdem angesehen, wenn die Überwachungseinrichtung mittels eines Umschalters die Trennung der Datenverbindung zwischen der Steuereinrichtung und dem geräteinternen Datenspeicher und die Herstellung der Datenverbindung zwischen der Datenschnittstelle und dem geräteinternen Datenspeicher veranlasst.

Zur näheren Erläuterung der Erfindung sind in den Figuren 1 bis 4 lediglich beispielhaft einige Ausführungsbeispiele dargestellt. Dabei zeigen
- Figur 1: ein über eine Datenschnittstelle mit einem externen Computer verbundenes Feldgerät perspektivischer Darstellung,
- Figur 2: ein erstes Ausführungsbeispiel eines elektrischen Feldgerätes in schematischer Blockschaltbilddar- stellung,
- Figur 3: ein zweites Ausführungsbeispiel eines elektrischen Feldgerätes in schematischer Blockschaltbilddar- stellung und
- Figur 4: ein drittes Ausführungsbeispiel eines elektrischen Feldgerätes in schematischer Blockschaltbilddar- stellung.

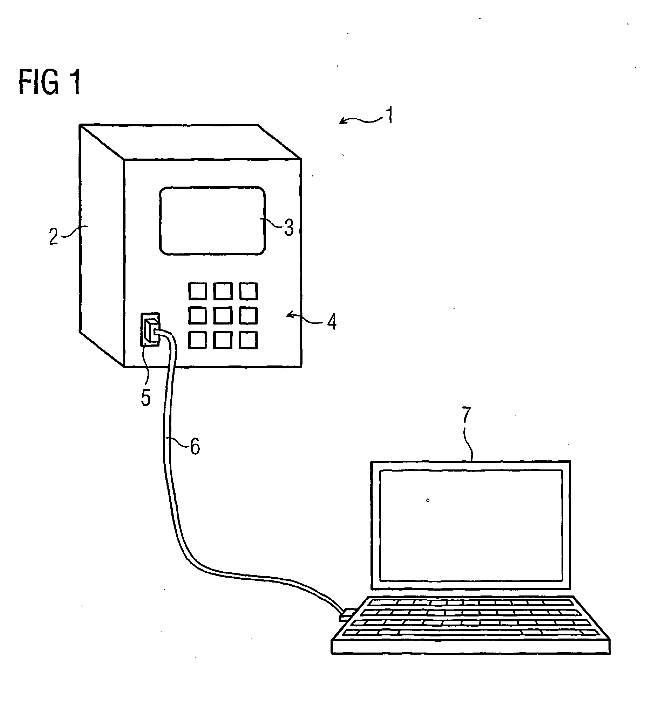

Figur 1 zeigt ein elektrisches Feldgerät 1, bei dem es sich beispielsweise um ein elektrisches Schutzgerät zum Schutz von elektrischen Energieversorgungsnetzen handeln kann. Das elektrische Feldgerät 1 weist ein Gehäuse 2 auf, das an seiner Frontseite eine Bedienplatte mit einem Display 3, einem Tastenfeld 4 und einer Datenschnittstelle 5 aufweist. Über die Datenschnittstelle 5 ist mittels einer Datenübertragungsleitung 6 mit dem elektrischen Feldgerät 1 eine externe Datenverarbeitungseinrichtung in Form eines Laptops 7 verbunden. Das Feldgerät 1 ist hierbei so ausgestaltet, dass auch dann, wenn beispielsweise in eine Steuereinrichtung und/oder eine interne Stromversorgung des elektrischen Feldgerätes 1 nicht in Betrieb sind (z.B. wegen eines Defektes), ein Datenaustausch zwischen einem geräteinternen Datenspeicher des Feldgerätes 1 und dem Laptop 7 über die Datenschnittstelle 5 durchführbar ist.

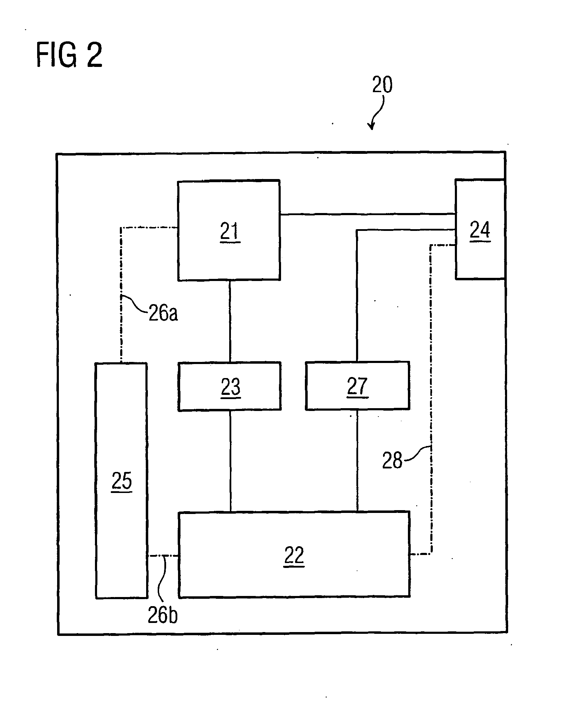

Der interne Aufbau des elektrischen Feldgerätes 1 ist in Figur 2 beispielhaft in einem ersten Ausführungsbeispiel dargestellt. Die Darstellung beschränkt sich dabei auf eine schematische Blockschaltbilddarstellung. Gemäß Figur 2 weist ein elektrisches Feldgerät 20 eine mikroprozessorgesteuerte Steuereinrichtung 21 auf, mit der die Funktionen des elektrischen Feldgerätes 20 durchgeführt werden. Zur Festlegung solcher Funktionen ist beispielsweise in einem geräteinternen Datenspeicher 22 eine Software (z.B. die Gerätefirmware) hinterlegt, durch deren Abarbeitung mittels der Steuereinrichtung 21 des elektrischen Feldgerätes 20 die gewünschten Funktionen durchgeführt werden.

Die Steuereinrichtung 21 greift auf den geräteinternen Datenspeicher 22 über einen ersten Speichercontroller 23 zu. Obwohl in Figur 2 der Speichercontroller 23 als eigenständiger Baustein des elektrischen Feldgerätes 20 dargestellt ist, besteht auch die Möglichkeit, die von dem Speichercontroller 23 durchgeführte Funktionalität in die Steuereinrichtung 21 zu integrieren.

Die Steuereinrichtung 21 ist ferner mit einer Datenschnittstelle 24 verbunden, über die externe Geräte mit dem elektrischen Feldgerät 10 in Verbindung gebracht werden können.

Die zur Steuerung der geräteinternen Prozesse, insbesondere der Steuereinrichtung 21 und des geräteinternen Datenspeichers 22, benötigte elektrische Energie wird von einer Stromversorgungseinrichtung 25, beispielsweise einem Netzteil des elektrischen Feldgerätes 20, bereitgestellt. Die Stromversorgungseinrichtung 25 ist gemäß Figur 2 über Leitungen 26a und 26b einerseits mit der Steuereinrichtung 21 und andererseits mit dem geräteinternen Datenspeicher 22 verbunden.

Fällt entweder die Stromversorgungseinrichtung 25 oder die Steuereinrichtung 21 des elektrischen Feldgerätes 20 aus, so kann über die Steuereinrichtung 21 und den ersten Speichercontroller 23 nicht mehr auf den geräteinternen Datenspeicher 22 zugegriffen werden. Um dennoch Daten in dem geräteinternen Datenspeicher 22 speichern oder aus diesem auslesen zu können, ist die Datenschnittstelle 24 über einen zweiten Speichercontroller 27 mit dem geräteinternen Datenspeicher 22 verbunden. Auf diese Weise kann über die Datenschnittstelle 24 direkt auf den geräteinternen Datenspeicher 22 zugegriffen werden, ohne dass hierfür die Steuereinrichtung 21 des elektrischen Feldgerätes 20 benötigt würde.

Für den Fall dass der geräteinterne Datenspeicher 22 zum Speichern und/oder Auslesen von Daten elektrische Energie benötigt, ist die Datenschnittstelle 24 über eine Stromversorgungsleitung 28 mit dem geräteinternen Datenspeicher 22 verbunden. So kann dem geräteinternen Datenspeicher 22 über die Datenschnittstelle 24 und die Stromversorgungsleitung 28 die für die Speicher- und Lesevorgänge benötigte elektrische Energie bereitgestellt werden.

Auf diese Weise kann von außen auf den geräteinternen Datenspeicher 22 des elektrischen Feldgerätes zugegriffen werden, ohne dass die Notwendigkeit besteht, dass die Steuereinrichtung oder die geräteinterne Stromversorgung des elektrischen Feldgerätes betriebsbereit sind. Neben einem Ausfall einer dieser beiden Komponenten, kann dies beispielsweise auch in dem Fall auftreten, wenn das elektrische Feldgerät noch nicht endgültig angeschlossen ist und somit beispielsweise noch keine externe Energieversorgung für die geräteinterne Stromversorgung 25 vorliegt. Beispielsweise kann bei dem elektrischen Feldgerät 20 sogar dann, wenn es sich in seiner Transportverpackung befindet, auf den geräteinternen Datenspeicher 22 zugegriffen werden, um beispielsweise ein Update der Firmware oder eine Parametereinstellung vorzunehmen. Hierzu muss lediglich die Datenschnittstelle 24 des elektrischen Feldgerätes 20 von außen zugänglich sein.

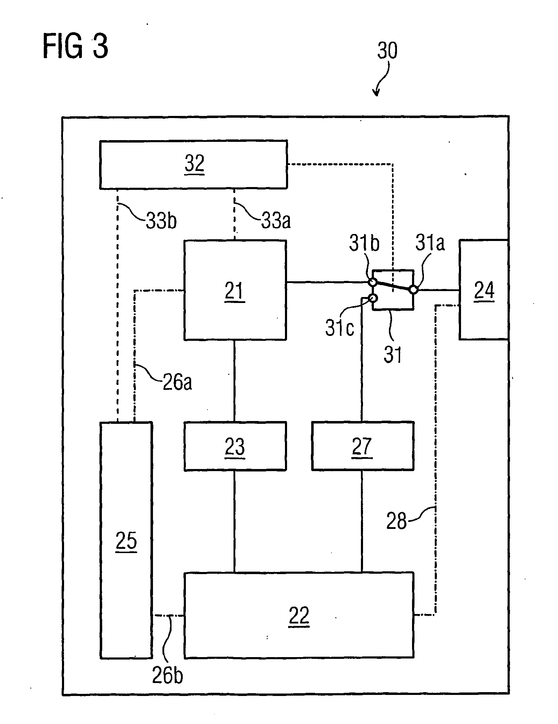

Figur 3 zeigt ein zweites Ausführungsbeispiel eines elektrischen Feldgerätes. Das in Figur 3 dargestellte elektrische Feldgerät 30 entspricht in wesentlichen Bestandteilen dem in Figur 2 dargestellten Feldgeräte 20, wobei gleiche Komponenten mit gleichen Bezugszeichen gekennzeichnet sind. So weist auch das Feldgerät 30 gemäß Figur 3 eine mikroprozessorgesteuerte Steuereinrichtung 21, eine geräteinterne Stromversorgung 25, einen geräteinternen Datenspeicher 22, eine Datenschnittstelle 24 sowie einen ersten Speichercontroller 23 und einen zweiten Speichercontroller 27 auf. Das Feldgerät 30 gemäß Figur 3 unterscheidet sich von dem Feldgerät 20 gemäß Figur 2 durch eine Umschaltvorrichtung 31, die eingangsseitig über einen ersten Anschluss 31a mit der Datenschnittstelle 24 und ausgangsseitig zum einen über einen zweiten Anschluss 31b mit der Steuereinrichtung 21 und zum anderen über einen dritten Anschluss 31c mit dem zweiten Speichercontroller 27 verbunden ist. Intern erlaubt die Umschaltvorrichtung 32 eine umschaltbare elektrische Verbindung entweder der Anschlüsse 31a und 31b oder der Anschlüsse 31a und 31c, so dass die Datenschnittstelle 24 entweder mit der Steuereinrichtung 21 des elektrischen Feldgerätes 30 oder dem zweiten Speichercontroller 27 verbunden ist.

Das Feldgerät 30 gemäß Figur 3 weist zudem eine Überwachungseinrichtung 32 auf, mittels der, wie durch die strichlierten Linien 33a und 33b angedeutet ist, die Steuereinrichtung 21 und die geräteinterne Stromversorgung 25 des elektrischen Feldgerätes 30 hinsichtlich ihrer Funktionstüchtigkeit überwacht werden. Abweichend von der Darstellung gemäß Figur 3 ist es auch möglich, nur eine der beiden Komponenten, also entweder die Steuereinrichtung 21 oder die Stromversorgung 25, oder auch zusätzliche Komponenten des elektrischen Feldgerätes 30 (z.B. einen Datenbus oder den ersten Speichercontroller 23) mittels der Überwachungseinrichtung 32 zu überwachen. Sind die überwachten Komponenten des elektrischen Feldgerätes 30 funktionstüchtig, so wird die Umschaltvorrichtung 31 mittels der Überwachungseinrichtung 32 derart angesteuert, dass die Datenschnittstelle 24 mit der Steuereinrichtung 21 verbunden ist. Auf diese Weise kann die Datenschnittstelle 24 von der Steuereinrichtung 21 des elektrischen Feldgerätes 30 angesteuert werden, beispielsweise um mittels der Steuereinrichtung 21 Daten in einem über die Datenschnittstelle 24 an das elektrische Feldgerät 30 angeschlossenen externen Datenspeichermodul, wie beispielsweise einem USB-Stick, abzulegen oder von diesem auszulesen. Außerdem kann über die Datenschnittstelle 24 in dieser Betriebsstellung mit dem elektrischen Feldgerät auch eine externe Datenverarbeitungseinrichtung, wie beispielsweise der in Figur 1 gezeigte Laptop 7, verbunden werden, wobei alle Kommunikation des elektrischen Feldgerätes 30 mit der externen Datenverarbeitungseinrichtung von der Steuereinrichtung 21 kontrolliert wird.

Ist zumindest eine der beiden überwachten Komponenten des elektrischen Feldgerätes 30 ausgefallen oder aus anderen Gründen nicht betriebsbereit, so wird die Umschalteinrichtung 31 über die Überwachungseinrichtung 32 derart angesteuert, dass die Datenschnittstelle 24 nunmehr über die zweiten Speichercontroller 27 mit dem geräteinternen Datenspeicher 22 verbunden ist. In dieser Stellung der Umschaltvorrichtung 31 kann über die Datenschnittstelle 24 direkt ein Zugriff auf den geräteinternen Datenspeicher 22 erfolgen, ohne dass die Steuereinrichtung 21 des elektrischen Feldgerätes hierzu aktiv sein müsste.

Da im Falle eines Ausfalls der geräteinternen Stromversorgung 25 üblicherweise auch die Überwachungseinrichtung 32 ohne elektrische Energie sein wird, ist zur Umschaltung der Umschaltvorrichtung 31 entweder die Überwachungseinrichtung 32 mit einem elektrischen Energiepuffer zu versehen, beispielsweise einem Kondensator, der ermöglicht, dass auch nach einem Ausfall der geräteinternen Stromversorgung 25 die Überwachungseinrichtung 32 noch so lange mit Strom versorgt wird, wie nötig ist, um einen Umschaltvorgang der Umschaltvorrichtung 31 vorzunehmen. Alternativ hierzu kann die Umschaltvorrichtung 31 auch derart ausgebildet sein, dass sie in einem stromlosen Zustand automatisch eine Verbindung zwischen ihren Anschlüssen 31a und 31c herstellt, so dass im stromlosen Zustand immer die Datenschnittstelle 24 über den zweiten Speichercontroller 27 mit dem geräteinternen Datenspeicher 22 verbunden ist, ohne dass ein aktiver Schaltvorgang seitens der Überwachungseinrichtung 32 stattfinden muss.

Obwohl die Überwachungseinrichtung 32 und die Umschaltvorrichtung 31 gemäß Figur 3 als separate Bauteile dargestellt sind, ist es auch möglich, diese in ein einziges Bauteil zu integrieren.

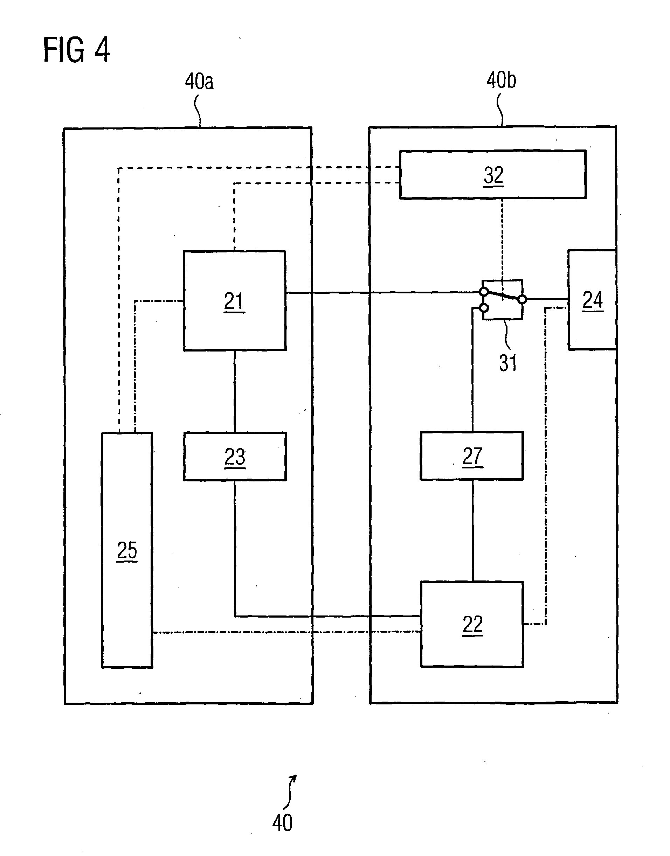

Figur 4 zeigt schließlich ein weiteres Ausführungsbeispiel eines elektrischen Feldgerätes. Gemäß Figur 4 besteht ein elektrisches Feldgerät 40 aus zwei Modulen, nämlich einem Gehäusemodul 40a, in dem die Steuereinrichtung 21, der erste Speichercontroller 23 und die interne Stromversorgung 25 angeordnet sind, und einer Bedieneinheit 40b, die den geräteinternen Datenspeicher 22, den zweiten Speichercontroller 27, die Datenschnittstelle 24, die Überwachungseinrichtung 32 und die Umschaltvorrichtung 31 umfasst. Bei dem Gehäusemodul 40a kann es sich beispielsweise um ein Feldgerätegrundmodul handeln, in dem die wesentlichen Funktionen des elektrischen Feldgerätes ausgeführt werden. Hierfür enthält Gerätemodul 40a die Steuereinrichtung 21. Bei der Bedieneinheit 40b kann es sich beispielsweise um eine solche Bedieneinheit handeln, die auf das Gerätemodul 40a aufsteckbar und von diesem abnehmbar ist.

Eine solche Bauweise eignet sich insbesondere beim Einbau eines solchen Feldgerätes 40 in einen Schaltschrank. Da die Bedienelemente des elektrischen Feldgerätes 40 auch von der äußeren Seite der Schaltschranktür zugänglich sein sollen, müsste üblicherweise das vollständige Feldgerät in die Schaltschranktür eingebaut werden. Bei einem modular aufgebauten Feldgerät muss jedoch nur die Bedieneinheit 40b des elektrischen Feldgerätes 40 in die Schaltschranktür eingebaut werden, während das Feldgerätegrundmodul bzw. das Gehäusemodul 40a im Inneren des Schaltschrankes angeordnet und mit entsprechenden Datenleitungen mit dem Bedienmodul 40b verbunden ist.

Damit bei einem modular aufgebauten Feldgerät auch bei nicht betriebsfähigem Grundgerät bzw. für den Fall, dass Grundgerät und Bedienmodul nicht miteinander verbunden sind, der geräteinterne Datenspeicher ausgelesen und beschrieben werden kann, sind in der Bedieneinheit 40b der geräteinterne Datenspeicher 22, der zweite Speichercontroller 27, die Datenschnittstelle 24 sowie die Umschaltvorrichtung 31 und die Überwachungsvorrichtung 32 angeordnet. Auf den Datenspeicher 22 kann, wie zu den Figuren 3 bereits beschrieben, über die Datenschnittstelle 24 zugegriffen werden. Zwischen den Gerätemodulen 40a und 40b sind elektrische Leitungen vorzusehen, um mindestens die in Figur 4 angedeuteten Verbindungen zwischen dem Gehäusemodul 40a und der Bedieneinheit 40b vorzunehmen.

## Patentansprüche

1. Elektrisches Feldgerät (20,30,40) mit
- einer mikroprozessorgesteuerten Steuereinrichtung (21),
- einem mit der Steuereinrichtung (21) über einen ersten Speichercontroller (23) in Verbindung stehenden geräteinternen Datenspeicher (22) und
- einer mit der Steuereinrichtung (21) in Verbindung stehenden Datenschnittstelle (24) zum Anschließen externer Geräte an das elektrische Feldgerät (20,30,40),
**dadurch gekennzeichnet, dass**
- die Datenschnittstelle (24) über einen zweiten Speichercontroller (27) mit dem geräteinternen Datenspeicher (22) verbindbar ist.

2. Elektrisches Feldgerät (20,30,40) nach Anspruch 1,
**dadurch gekennzeichnet, dass**
- der geräteinterne Datenspeicher (22) und die Datenschnittstelle (24) mittels einer Stromversorgungsleitung (28) verbunden sind.

3. Elektrisches Feldgerät (30,40) nach Anspruch 1 oder 2, **gekennzeichnet durch**
- eine eingangsseitig mit der Datenschnittstelle (24) und ausgangsseitig mit der Steuereinrichtung (21) und dem zweiten Speichercontroller (27) verbundenen Umschaltvorrichtung (31) und
- eine Überwachungseinrichtung (32), die zum Überwachen einer geräteinternen Stromversorgung (25) und/oder der Steuereinrichtung (21) des elektrischen Feldgerätes (1) auf Funktionstüchtigkeit ausgebildet ist und bei einem Ausfall der geräteinternen Stromversorgung (25) und/oder der Steuereinrichtung (21) die Umschaltvorrichtung (31) zum Trennen der Verbindung zwischen der Datenschnittstelle (24) und der Steuereinrichtung (21) und zum Herstellen der Verbindung zwischen der Datenschnittstelle (24) und dem zweiten Speichercontroller (27) veranlasst.

4. Elektrisches Feldgerät (40) nach einem der vorangehenden Ansprüche, **dadurch gekennzeichnet, dass** - das elektrische Feldgerät (40) eine abnehmbare Bedieneinheit (40b) aufweist, die zumindest den geräteinternen Datenspeicher (22), die Datenschnittstelle (24) und den zweiten Speichercontroller (27) umfasst.

5. Verfahren zum Herstellen einer Datenverbindung zwischen einer Datenschnittstelle (24) eines elektrischen Feldgerätes (20,30,40) und einem geräteinternen Datenspeicher (22), bei dem folgende Schritte durchgeführt werden:
- eine Überwachungseinrichtung (32) überwacht die Funktionstüchtigkeit einer Steuereinrichtung (21) und/oder einer internen Stromversorgung (25) des elektrischen Feldgerätes (30,40);
- bei Ausfall der Steuereinrichtung (21) und/oder der internen Stromversorgung (25) veranlasst die Überwachungseinrichtung (32) eine Trennung der Datenverbindung zwischen der Steuereinrichtung (21) und dem geräteinternen Datenspeicher (22) und eine Herstellung einer Datenverbindung zwischen der Datenschnittstelle (24) und dem geräteinternen Datenspeicher (22) über einen Speichercontroller (27).

6. Verfahren nach Anspruch 5,
**dadurch gekennzeichnet, dass**
- die Überwachungseinrichtung (32) mittels eines Umschalters (31) die Trennung der Datenverbindung zwischen der Steuereinrichtung (21) und dem geräteinternen Datenspeicher (22) und die Herstellung der Datenverbindung zwischen der Daten- schnittstelle (24) und dem geräteinternen Datenspeicher (22) veranlasst.

## Claims

1. Electrical field device (20, 30, 40) having
- a microprocessor-controlled control device (21),
- a data memory (22) which is inside the field device and is connected to the control device (21) via a first memory controller (23), and
- a data interface (24) which is connected to the control device (21) and is intended for connecting external equipment to the electrical field device (20, 30, 40),
**characterized in that**
- the data interface (24) can be connected to the data memory (22) inside the field device via a second memory controller (27).

2. Electrical field device (20, 30, 40) according to Claim 1,
**characterized in that**
- the data memory (22) inside the field device and the data interface (24) are connected by means of a power supply line (28).

3. Electrical field device (30, 40) according to Claim 1 or 2,
**characterized by**
- a changeover apparatus (31) whose input is connected to the data interface (24) and whose output is connected to the control device (21) and to the second memory controller (27), and
- a monitoring device (32) which is designed to monitor a field device internal power supply (25) and/or the control device (21) of the electrical field device (1) for functionality and, if the field device's internal power supply (25) and/or the control device (21) fails, prompts the changeover apparatus (31) to break the link between the data interface (24) and the control device (21) and to set up the link between the data interface (24) and the second memory controller (27).

4. Electrical field device (40) according to one of the preceding claims, **characterized in that**
- the electrical field device (40) has a removable operator control unit (40b) which comprises at least the data memory (22) inside the field device, the data interface (24) and the second memory controller (27).

5. Method for setting up a data link between a data interface (24) in an electrical field device (20, 30, 40) and a data memory (22) inside the field device, in which the following steps are performed:
- a monitoring device (32) monitors the functionality of a control device (21) and/or an internal power supply (25) in the electrical field device (30, 40);
- if the control device (21) and/or the internal power supply (25) fails, the monitoring device (32) prompts the data link between the control device (21) and the data memory (22) inside the field device to be broken and a data link between the data interface (24) and the data memory (22) inside the field device to be set up via a memory controller (27).

6. Method according to Claim 5,
**characterized in that**
- the monitoring device (32) uses a changeover switch (31) to prompt the data link between the control device (21) and the data memory (22) inside the field device to be broken and the data link between the data interface (24) and the data memory (22) inside the field device to be set up.

## Revendications

1. Appareil (20, 30, 40) électrique de terrain, comprenant
- un dispositif (21) de commande commandé par micro processeur,
- une mémoire (22) de données interne à l'appareil en communication avec le dispositif (21) de commande par l'intermédiaire d'un premier contrôleur (23) de mémoire et
- une interface (24) de données en liaison avec le dispositif (21) de commande pour le raccordement d'appareils extérieurs à l'appareil (20, 30, 40) électrique de terrain,
**caractérisé en ce que**
- l'interface (24) de données peut être reliée à la mémoire (22) de données interne à l'appareil par l'intermédiaire d'une deuxième contrôleur (27) de mémoire.

2. Appareil (20, 30, 40) électrique de terrain suivant la revendication 1,
**caractérisé en ce que**
- la mémoire (22) de données interne à l'appareil et l'interface (24) de données sont reliés au moyen d'une ligne (28) d'alimentation au courant.

3. Appareil (20, 30, 40) électrique de terrain suivant la revendication 1 ou 2,
**caractérisé en ce que**
- un dispositif (31) de commutation relié du côté de l'entrée à l'interface (24) de données et du côté de la sortie au dispositif (21) de commande et au deuxième contrôleur (27) de mémoire, et
- un dispositif (32) de contrôle qui est conçu pour contrôler une alimentation (25) en courant interne à l'appareil et/ou le dispositif (21) de commande de l'appareil (1) électrique de terrain du point de vue de son aptitude à fonctionner et, en cas de panne de l'alimentation (25) en courant interne à l'appareil et/ou du dispositif (21) de commande, le dispositif (31) de commutation provoque une interruption de la liaison entre l'interface (24) de données et le dispositif (21) de commande et l'établissement de la liaison entre l'interface (24) de données et le deuxième contrôleur (27) de mémoire.

4. Appareil (40) électrique de terrain suivant l'une des revendications précédentes, **caractérisé en ce que**
- l'appareil (40) électrique de terrain a une unité (40b) de service qui peut être enlevée et qui comprend au moins la mémoire (22) de données interne à l'appareil, l'interface (24) de données et le deuxième contrôleur (27) de mémoire.

5. Procédé d'établissement une liaison de données entre une interface (24) de données d'un appareil (20, 30, 40) électrique de terrain et une mémoire (22) de données interne à l'appareil, dans lequel on effectue les stades suivantes :
- un dispositif (32) de contrôle contrôle l'aptitude à fonctionner d'un dispositif (21) de commande et/ou d'une alimentation (25) interne en courant de l'appareil (30, 40) électrique de terrain ;
- en cas de panne du dispositif (21) de commande et/ou de l'alimentation (25) interne en courant, le dispositif (32) de contrôle provoque une interruption de la liaison de données entre le dispositif (21) de commande et la mémoire (22) de données interne à l'appareil et établit une liaison de données entre l'interface (24) de données et la mémoire (22) de données interne à l'appareil par l'intermédiaire d'un contrôleur (27) de mémoire.

6. Procédé suivant la revendication 5,
**caractérisé en ce que**
- le dispositif (32) de contrôle provoque au moyen d'un commutateur (31) l'interruption de la liaison de données entre le dispositif (21) de commande et la mémoire (22) de données interne à l'appareil et l'établissement de la liaison de données entre l'interface (24) de données et la mémoire (22) de données interne à l'appareil.
